# EUROPÄISCHE PATENTSCHRIFT

(11) **EP 0 823 548 B1**
(45) Veröffentlichungstag und Bekanntmachung des Hinweises auf die Patenterteilung: **04.10.2001**
(21) Anmeldenummer: 97111587.8
(22) Anmeldetag: 09.07.1997
(51) Int. Cl.: F02M 35/16

(54) **Anordnung eines Luftfiltergehäuses im Motorraum eines Kraftfahrzeuges**
Arrangement of an air filter housing in the motor compartment of a motor vehicle
Arrangement d'un boîtier de filtre à air dans le compartiment moteur d'un véhicule à moteur

(30) Priorität: 09.08.1996 DE 19632205
(43) Veröffentlichungstag der Anmeldung: 11.02.1998
(73) Patentinhaber: Bayerische Motoren Werke Aktiengesellschaft, 80788 München (DE)
(72) Erfinder: Lang, Heinz, 85253 Erdweg (DE)

(56) Entgegenhaltungen:
- DE-A- 3 821 936
- US-A- 4 440 555
- US-A- 5 295 602

## Beschreibung

Die Erfindung betrifft eine Anordnung eines Luftfiltergehäuses im Motorraum eines Kraftfahrzeuges, mit einer Rohluftschale und einer Reinluftschale, die lösbar miteinander verbunden sind, ein austauschbares Ansaug-Luftfilter aufnehmen und an die sich jeweils ein Luftführungskanal anschließt.

Derartige Anordnungen sind bei heutigen Kraftfahrzeugen und insbesondere Personenkraftwagen allgemeiner Stand der Technik; üblicherweise ist dabei die Rohluftschale karosseriefest angebunden, während die Reinluftschale einfach entfernbar ist, um ein verschmutztes Ansaug-Luftfilter austauschen zu können (siehe DE 38 21 936). Insbesondere in räumlich eng begrenzten Motorräumen von Personenkraftwagen kann jedoch die freie Zugänglichkeit der zu Filtertauschzwecken zu entfernenden Luftschale des Luftfiltergehäuses relativ kompliziert sein, weshalb sich die vorliegende Erfindung die Aufgabe gestellt hat, eine Luftfiltergehäuse-Anordnung aufzuzeigen, die sich durch besondere Kompaktheit auszeichnet und dennoch eine gute Zugänglichkeit für den Austausch des Luftfilters gewährleistet.
Zur Lösung dieser Aufgabe ist vorgesehen, daß die Reinluftschale im wesentlichen fest und der der Rohluftschale zugeordnete Luftführungskanal geringfügig bewegbar an der Karosserie des Kraftfahrzeuges befestigt ist, daß die Rohluftschale mit dem zugeordneten Luftführungskanal über eine Schwalbenschwanzführung verbunden ist, und daß die Rohluftschale nach Lösen zumindest eines Verbindungselementes von der Reinluftschale sowie vom Luftführungskanal in Freigängigkeitsrichtung der Schwalbenschwanzführung trennbar ist. Vorteilhafte Aus- und Weiterbildungen sind fakultativ im abhängigen Patentanspruch angegeben.

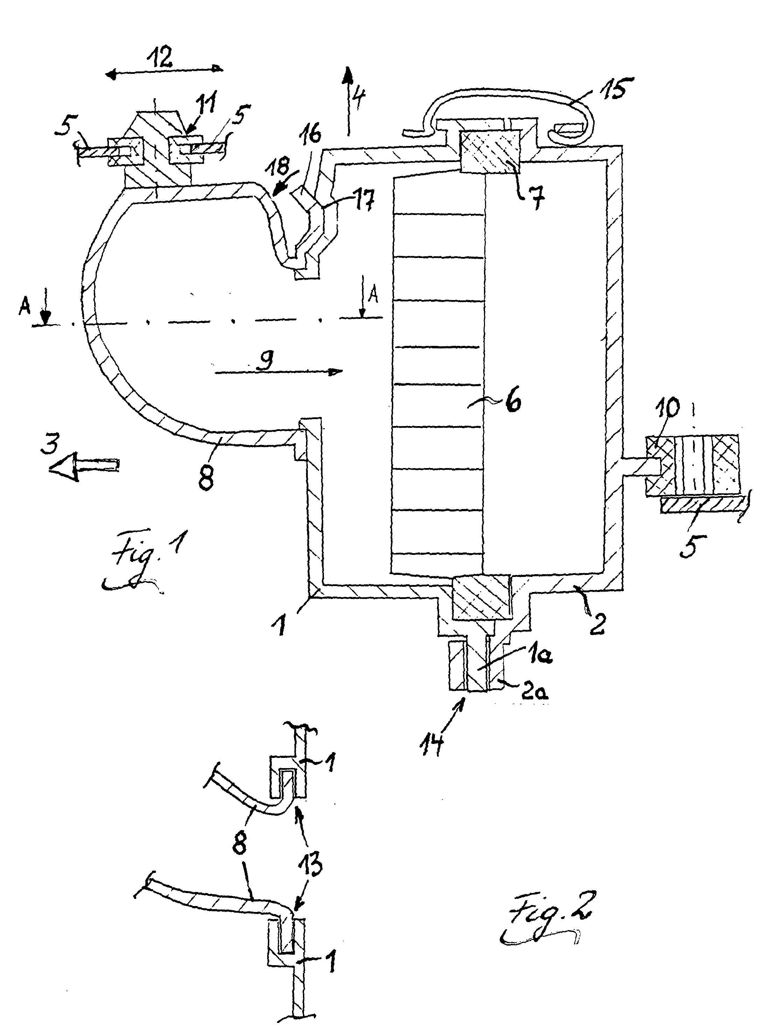

Näher erläutert wird die Erfindung anhand eines bevorzugten Ausführungsbeispieles, das in der beigefügten Fig. 1 in einem Prinzipschnitt dargestellt ist, und von dem Fig. 2 den Teilschnitt A-A aus Fig. 1 zeigt.

In einem nicht dargestellten Motorraum eines Kraftfahrzeuges ist das gezeigte Luftfiltergehäuse, bestehend aus einer Rohluftschale 1 sowie einer Reinluftschale 2 wie ersichtlich angeordnet, wobei die übliche Fahrtrichtung des Kraftfahrzeuges durch den Pfeil 3 dargestellt ist und ein weiterer Pfeil 4 im wesentlichen senkrecht zur Grundfläche des Kraftfahrzeuges steht und hierbei nach oben hin aus dem Motorraum hinausweist. Von der den Motorraum bildenden Karosserie des Kraftfahrzeuges sind einige Blechlaschen bruchstückhaft dargestellt und mit der Bezugsziffer 5 bezeichnet, wobei diese Bezugsziffer 5 im folgenden auch für die Karosserie des Kraftfahrzeuges allgemein verwendet wird.

Wie üblich nimmt das durch die Rohluftschale 1 sowie die Reinluftschale 2 gebildete Luftfiltergehäuse ein austauschbares Luftfilter 6, das mit einer umlaufenden Dichtung 7 versehen ist, formschlüssig auf. Während sich an die Reinluftschale ein nicht gezeigter, zur Brennkraftmaschine des Kraftfahrzeuges führender Luftführungskanal anschließt, ist der Rohluftschale 1 ein Luftführungskanal 8 zugeordnet, über den die Ansaugluft der Brennkraftmaschine beispielsweise von der Karosseriestirnseite in die Rohluftschale 1 geführt wird. Die entsprechende Luftströmungsrichtung ist durch den Pfeil 9 dargestellt.

Die Reinluftschale 2 ist wie ersichtlich über ein Dämpfungselement 10 im wesentlichen fest an der Karosserie 5 des Kraftfahrzeuges befestigt. Ein ähnliches Dämpfungselement 11 ist an der Außenwand des Luftführungskanales 8 vorgesehen, wobei dieses Dämpfungselement 11 ebenfalls Blechlaschen der Karosserie 5 aufnimmt, so daß auch der Luftführungskanal 8 an der Karosserie 5 befestigt ist. Diese Befestigung ist dabei jedoch derart ausgebildet, daß der Luftführungskanal 8 geringfügig gemäß Pfeilrichtung 12 verschiebbar ist.

Für die Verbindung zwischen der Rohluftschale 1 und dem Luftführungskanal 8 ist im wesentlichen die aus Fig. 2 ersichtliche Schwalbenschwanzführung 13 vorgesehen. Diese übliche, dem Fachmann bekannte Schwalbenschwanzführung 13 besitzt eine bevorzugte Freigängigkeitsrichtung, welche der Pfeilrichtung 4 entspricht.
Für die Verbindung zwischen der Rohluftschale 1 und der Reinluftschale 2 ist ein Steckscharnier 14 vorgesehen, welches ebenfalls gemäß Pfeilrichtung 4 und somit in Freigängigkeitsrichtung der Schwalbenschwanzführung 13 trennbar ist. Dieses Steckscharnier 14 ist dabei durch eine an der Reinluftschale 2 vorgesehene Aufnahme 2a gebildet, in welche eine entsprechende Nase 1a der Rohluftschale 1 einsteckbar ist.

Weiterhin verbunden ist die Rohluftschale 1 mit der Reinluftschale 2 über zumindest ein lösbares Verbindungselement in Form einer Blechklammer 15, anstelle derer aber auch ein üblicher, dem Fachmann bekannter Kniehebel vorgesehen sein kann. Diese Blechklammer 15 greift dabei in entsprechenden Aufnahmen, die an der Außenwand der Rohluftschale 1 und der Reinluftschale 2 vorgesehen sind, an.
Eine ebensolche lösbare zusätzliche Verbindung ist zwischen dem Luftführungskanal 8 und der Rohluftschale 1 vorgesehen, und zwar in Form einer Lasche 16, die an den Luftführungskanal 8 angeformt ist, und die im dargestellten montierten Zustand in einen Hinterschnitt 17 in der Außenwand der Rohluftschale 1 eingreift. Diese Lasche 16 ist dabei derart flexibel ausgebildet, daß sie gemäß Pfeilrichtung 18 aus dem Hinterschnitt 17 heraus verschwenkbar ist.

Die beschriebene Anordnung zeichnet sich nicht nur durch einen äußerst kompakten Aufbau aus, sondern auch dadurch, daß das Luftfilter 6 auf einfache Weise ausgetauscht werden kann. Hierzu wird zunächst die erste lösbare Verbindung zwischen der Rohluftschale 1 und der Reinluftschale 2 in Form der einen oder mehreren Blechklammern 15 gelöst. Anschließend daran ist es möglich, den Luftführungskanal 8 zusammen mit der Rohluftschale 1 geringfügig gemäß Pfeilrichtung 12 von der Reinluftschale 2 wegzuschieben bzw. wegzuverschwenken, so weit dies das Steckscharnier 14 zuläßt. Nunmehr wird die Lasche 16 gemäß Pfeilrichtung 18 aus dem Hinterschnitt 17 herausgeschwenkt, so daß in Folge die Rohluftschale 1 zusammen mit dem Luftfilter 6 entlang der Schwalbenschwanzführung 13 in deren Freigängigkeitsrichtung gemäß Pfeilrichtung 4 herausgezogen werden kann. Nunmehr kann das Luftfilter 6 aus der Rohluftschale 1 entfernt, die Rohluftschale 1 von Schmutzrückständen gereinigt und ein neues Luftfilter 6 eingesetzt werden, wonach der Montagevorgang in der umgekehrten Reihenfolge erfolgen kann.

Wie ersichtlich zeichnet sich die beschriebene Luftfiltergehäuse-Anordnung durch einen äußerst geringen Freiraumbedarf für das Wechseln des Luftfilters 6 aus. Es ist nämlich nur erforderlich, die Rohluftschale 1 gemeinsam mit dem Luftfilter 6 geringfügig gemäß Pfeilrichtung 12 nach links zu verschwenken, wonach diese beiden Bauteile gemäß Pfeilrichtung 4 nach oben hin aus dem offenen Motorraum abgezogen werden können. Dieser Freiraumbedarf ist deutlich geringer als bei den bisher üblichen Systemen, die einen Freiraum zumindest in Höhe bzw. Dicke des Luftfilters 6 benötigten. Vorteilhafterweise ist mit der beschriebenen Anordnung auch keine Trennung auf der Reinluftseite erforderlich, d. h. der sich an die Reinluftschale 2 anschließende Luftführungskanal muß nicht von der Reinluftschale 2 getrennt werden, wobei besonders zu Buche schlägt, daß die Verbindungsstellen im reinluftseitigen Bereich üblicherweise deutlich höheren Dichtigkeitsanforderungen genügen müssen, als diejenigen auf der Rohluftseite. Vorteilhafterweise kommt das beschriebene System ohne separate zusätzliche Bauelemente aus und darüber hinaus kann bei einem Wechsel des Luftfilters 6 gleichzeitig die verschmutzte Rohluftschale 1 auf einfache Weise einer Reinigung unterzogen werden. Noch ein weiterer Vorteil ist schließlich in der Erstmontage des Systemes in der Fabrik für das Kraftfahrzeug zu sehen. Hier kann nämlich zunächst der Luftführungskanal 8 für sich alleine montiert werden, während das Luftfiltergehäuse ohne weiteres an einer späteren Position nachträglich angebaut werden kann. Schließlich zeichnen sich die einzelnen Bauelemente auch durch einfache Bauweise aus, so kann beispielsweise der Luftführungskanal als Blasteil hergestellt sein. Jedoch kann dies sowie weitere Details insbesondere konstruktiver Art durchaus abweichend vom gezeigten Ausführungsbeispiel gestaltet sein, ohne den Inhalt der Patentansprüche zu verlassen, bspw. können die Dämpfungselemente 10 und 11 auch als nicht dämpfende Befestigungselemente ausgebildet sein oder die Blechklammer 15 kann durch eine Schraubverbindung ersetzt werden.

## Patentansprüche

1. Anordnung eines Luftfiltergehäuses im Motorraum eines Kraftfahrzeuges, mit einer Rohluftschale (1) und einer Reinluftschale (2), die lösbar miteinander verbunden sind, ein austauschbares Ansaug-Luftfilter (6) aufnehmen und an die sich jeweils ein Luftführungskanal (8) anschließt,
**dadurch gekennzeichnet, daß** die Reinluftschale (2) im wesentlichen fest und der der Rohluftschale (1) zugeordnete Luftführungskanal (8) geringfügig bewegbar an der Karosserie (5) des Kraftfahrzeuges befestigt ist,
**daß** die Rohluftschale (1) mit dem zugeordneten Luftführungskanal (8) über eine Schwalbenschwanzführung (13) verbunden ist,
und **daß** die Rohluftschale (1) nach Lösen zumindest eines Verbindungselementes von der Reinluftschale (2) sowie vom Luftführungskanal (8) in Freigängigkeitsrichtung (4) der Schwalbenschwanzführung (13) trennbar ist.

2. Anordnung nach Anspruch 1,
**gekennzeichnet durch** zumindest eines der folgenden Merkmale:
- die Rohluftschale (1) ist mit der Reinluftschale (2) über zumindest ein in Freigängigkeitsrichtung (4) der Schwalbenschwanzführung (13) trennbares Steckscharnier (14) verbunden
- ein lösbares Verbindungselement zwischen der Rohluftschale (1) sowie dem zugeordneten Luftführungskanal (8) ist als an den Luftführungskanal (8) angeformte, in einen Hinterschnitt (17) an der Rohluftschale (1) eingreifende Lasche (16) ausgebildet.
- der Rohluftschalen-Luftführungskanal (8) ist im wesentlichen quer zur Freigängigkeitsrichtung (4) der Schwalbenschwanzführung (13) geringfügig verschiebbar an der Karosserie (5) befestigt
- ein lösbares Verbindungselement zwischen der Rohluftschale (1) und der Reinluftschale (2) ist als Blechklammer (15) oder Kniehebel ausgebildet.
- die Freigängigkeitsrichtung (4) der Schwalbenschwanzführung (13) weist im wesentlichen senkrecht zur Grundfläche des Kraftfahrzeug

## Claims

1. An air filter casing disposed in the engine space of a motor vehicle, comprising a crude air plate (1) and a pure air plate (2) which are releasably interconnected, receive an interchangeable intake air filter (6), and each adjoin an air duct (8),
**characterised in that** the pure air plate (2) is substantially fixed and the air duct (8) associated with the crude air plate (1) is fastened to the vehicle body (5) so as to be slightly movable,
the crude air plate (1) and the associated air duct (8) are connected by a dovetail guide (13), and
the crude air plate (1), after releasing at least one connecting element, is separable from the pure air plate (2) and from the air duct (8) in the direction (4) of free motion of the dovetail guide (13).

2. An arrangement according to claim 1,
**characterised by** at least one of the following features:
- the crude air plate (1) is connected to the pure air plate (2) by at least one plug-in hinge (14) separable in the direction (4) of free motion of the dovetail guide (13),
- a releasable connecting element between the crude air plate (1) and the associated air duct (8) is in the form of a lug (16) integrally moulded on the air duct (8) and engaging in an undercut (17) on the crude air plate (1),
- the air duct (8) associated with the crude air plate is fastened to the body (5) so as to be slightly movable substantially transversely to the direction (4) of free motion of the dovetail guide (13),
- a releasable connecting element between the crude air plate (1) and the pure air plate (2) is in the form of a sheet-metal clamp (15) or bent lever,
- the direction (4) of free motion of the dovetail guide (13) extends substantially at right angles to the base surface of the vehicle.

## Revendications

1. Arrangement d'un boîtier de filtre à air dans le compartiment moteur d'un véhicule automobile, comprenant une coquille d'air brut (1) et une coquille d'air épuré (2) reliées entre elles de manière amovible contenant un filtre d'air aspiré (6), et à chacune desquelles est raccordé un canal de guidage d'air (8),
**caractérisé en ce que**
- la coquille d'air épuré (2) est montée essentiellement fixe et le canal de conduite d'air (8) associé à la coquille d'air brut (1) est fixé à la carrosserie (5) du véhicule tout en pouvant être faiblement déplacé,
- la coquille d'air brut (1) est reliée au canal d'amenée d'air (8) qui lui est associé, par un guidage à queue d'aronde (13), et
- la coquille d'air brut (1), après dégagement d'au moins un élément de liaison de la coquille d'air épuré (2) ainsi que du canal d'amenée d'air (8), peut être séparée selon la direction de libre accès (4) du guidage à queue d'aronde (13).

2. Arrangement selon la revendication 1,
**caractérisé par** au moins l'une des caractéristiques suivantes :
- la coquille d'air brut (1) est reliée à la coquille d'air épuré (2) par au moins une charnière à emmanchement (14) pouvant être séparée selon la direction de libre accès (4) du guidage à queue d'aronde (13),
- un élément de liaison amovible entre la coquille d'air brut (1) et le canal de guidage d'air (8) qui lui est associé est constitué par une patte (16) moulée sur le canal (8) et en prise dans une contre-dépouille (17) que présente la coquille d'air brut (1),
- le canal de guidage d'air (8) de coquille d'air brut est fixé à la carrosserie (5) essentiellement transversalement à la direction de libre accès (4) du guidage à queue d'aronde (13), tout en pouvant être faiblement déplacé,
- un élément amovible de liaison entre la coquille d'air brut (1) et la coquille d'air purifié (2) est constitué par une pince en tôle (15) ou un levier à genouillère,
- la direction de libre accès (4) du guidage à queue d'aronde (13) est essentiellement perpendiculaire à la surface de base du véhicule.
